(19) Europäisches Patentamt
European Patent Office
Office européen des brevets

(11) **EP 2 104 391 B1**

(12) **EUROPEAN PATENT SPECIFICATION**

(45) Date of publication and mention
of the grant of the patent:
**31.03.2010 Bulletin 2010/13**

(51) Int Cl.:
***H04W 72/04*** *(2009.01)*

(21) Application number: **08005368.9**

(22) Date of filing: **20.03.2008**

(54) **A transceiver apparatus and a method for transceiving data packets in a mobile communication network**

Sende-/Empfangsvorrichtung und Verfahren zum Senden und Empfangen von Datenpaketen in einem mobilen Kommunikationsnetzwerk

Appareil émetteur-récepteur et procédé pour l'émission-réception de paquets de données dans un réseau de communications mobile

(84) Designated Contracting States:
**DE GB**

(43) Date of publication of application:
**23.09.2009 Bulletin 2009/39**

(73) Proprietor: **NTT DoCoMo, Inc.**
**Chiyoda-ku**
**Tokyo 100-6150 (JP)**

(72) Inventor: **Auer, Gunther, Dr.**
**80339 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 868 400     WO-A-2008/003815**

EP 2 104 391 B1

**Description**

The present invention is in the field of mobile communication networks and efficient radio resource allocation and management.

Radio resource allocation and management can, for example, be carried out by channel reservation protocols. The resources are managed in a centralized manner in conventional systems, some research focuses on decentralized channel reservation protocols, such as reservation ALOHA (R-ALOHA), cf W. Crowther, R. Rettberg, D. Walden, S. Ornstein, and F. Heart, "A System for Broadcast Communications: Reservation-ALOAH," in Proc. 6th Hawaii Int. Conf. Sys. Sci., January 1973, pp. 371-374.

Another example is the packet reservation multiple access (PRMA) protocol, cf D. J. Goodman, R. A. Valenzuela, K. T. Gayliard, and B. Ramamurthi, "Packet Reservation Multiple Access for Local Wireless Communications," IEEE Trans. Commun., vol. 37, no. 8, pp. 885-890, August 1989, where the decentralized channel reservation protocols can be used in cellular wireless networks. Packet reservation multiple access allows a variety of information sources to share the same wireless access channel. Some of the sources, such as speech terminals, can be classified as periodic and others, such as signaling, can be classified as random. Packets from all sources contest for access to channel time slots. When a periodic information terminal succeeds in gaining access, it reserves subsequent time slots for uncontested transmission.

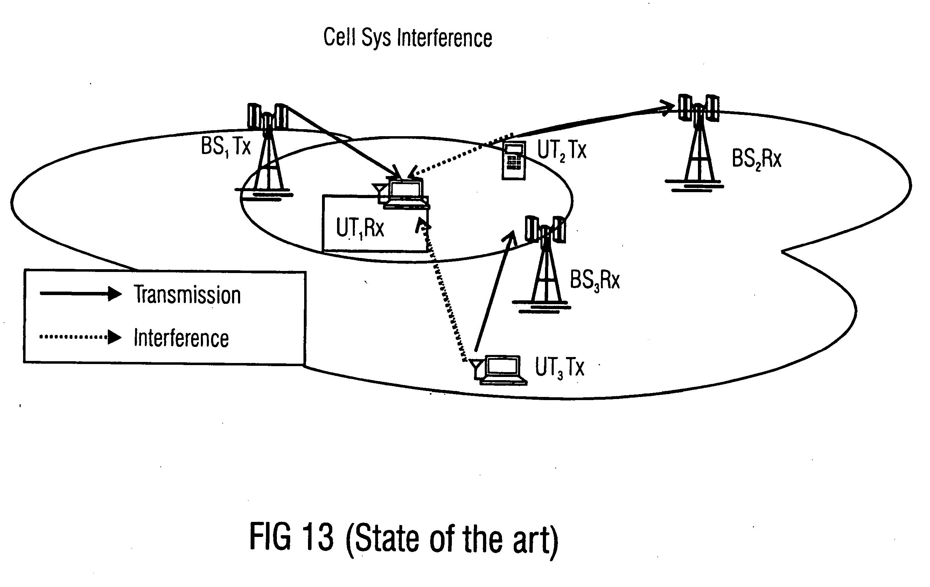

The principle of contention will be explained in the following. Fig. 13 illustrates a scenario, wherein three base stations $BS_1$, $BS_2$ and $BS_3$ are shown. Moreover, three user terminals $UT_1$, $UT_2$ and $UT_3$ are shown. Additional superscripts "Rx" indicate the receivers and the superscripts "Tx" indicate the transmitters. Moreover, solid arrows indicate the transmission of payload data, which is, in turn, interference to other transceivers in a network and indicated by the dotted arrows.

Before transmitting, users scan the channel and in case the channel is idle, a packet is transmitted by using, for example, the slotted ALOHA, cf L. Roberts, "ALOHA packet system with and without slots and capture," ACM Comput. Commun. Rev., vol. 5, pp. 28-42, April 1975 to contest with other terminals for an unreserved slot. As indicated in Fig. 13, collisions may occur, i.e. multiple transceivers, possibly user terminals or base stations, might be trying to access a certain slot, which had been idle, at the same time. If a terminal does not successfully transmit a first packet in a first unreserved slot, it may re-transmit the packet with probability q in subsequent unreserved slots. It continues to do so until the base station acknowledges successful reception of the packet.

Referring to the scenario depicted in Fig. 13, the terminal $UT_1^{Rx}$ acts as a receiver. Base station $BS_1^{Tx}$ tries to transmit payload data to $UT_1^{Rx}$. At the same time, the two other terminals $UT_2^{Tx}$ and $UT_3^{Tx}$ act as transmitters trying to transmit payload data to their respective base stations $BS_2^{Rx}$ and $BS_3^{Rx}$, thereby creating interference for $UT_1^{Rx}$.

Due to the interference, successful reception of the transmission from $BS_1^{Tx}$ at $UT_1^{Rx}$ may fail. According to the conventional protocols, may continue re-transmitting the packets with probability q until the receiver acknowledges success for reception of the packet. Fig. 13 only shows an example, the similar concept yields for the uplink, where a user terminal tries to transmit payload data to a base station as, for example, $UT_2^{Tx}$ and $UT_3^{Tx}$ in Fig. 13.

In the following, the reservation mode will be further explained. After the reception of each packet, a base station or also a terminal may broadcast the outcome in an acknowledgement packet. When the base station acknowledges accurate reception, the terminal that had sent the packet then reserves the slot for future transmissions. All terminals then refrain from using that slot in future frames, as the acknowledgement packet indicates that this slot is not idle. The terminal with the reservation, thus, has uncontested use of the slot.

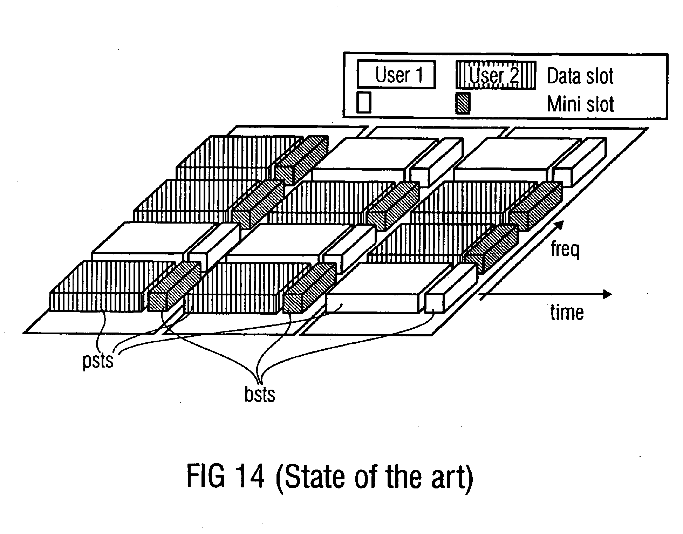

Fig. 14 shows a principle illustration of a reservation mode. Fig. 14 shows a diagram having a frequency and a time dimension. Along the time dimension, a radio frame is shown, which is sub-divided in payload signal time slots, which are labeled "psts" and are also referred to as data slots, as well as busy signal time slots, which are labeled "bsts" and which may also be referred to as mini slots. The shown radio frames may refer e.g. to layer 2, i.e. MAC (Medium Access Control) frames. In Fig. 14, data packets transmitted during payload signal time slots of user 1 are in white color and those of user 2 in grey color. The acknowledgement packets for user 1 in the busy signal time slots or mini slots are indicated in grey and those for user 2 are indicated in black. It can be seen from Fig. 14 that the duration of a payload signal time slot is much longer than the duration of a busy signal time slot, as during the busy signal time slot, only an acknowledgement is transmitted. Moreover, Fig. 14 indicates that the similar time structure of a radio frame can be reused at multiple frequencies along the frequency axis. In addition, the allocation of the different payload signal and busy signal time slots on the different frequencies may be different with respect to the users.

An efficient means to implement such a channel reservation protocol, for example, in an OFDMA-TDD (Orthogonal Frequency Division Multiple Access-Time Domain Duplex) systems can be provided by the busy tone concept as introduced in H. Haas, V. D. Nguyen, P. Omiyi, N. H. Nedev, and G. Auer, "Interference Aware Medium Access in Cellular OFDMA/TDD Network," in Proc. IEEE Int. Conf. Commun. (ICC'06) , Istanbul, Turkey.Istanbul, Turkey: IEEE, June 11-15 2006.

The authors propose a decentralized and interference-aware medium access control (MAC) protocol combined with a dynamic sub-channel selection algorithm for OFDM. The protocol resolves several drawbacks of the existing radio resource allocation techniques for OFDM systems, such as the hidden and exposed node problem and the requirement for a time-invariant channel. The proposed scheme enables a transmitter to determine the level of interference it would cause to already active links prior to any transmission. This can be achieved through a busy-slot signaling that exploits the channel reciprocity offered by the TDD mode. Compared to existing radio resource allocation schemes, the required signaling overhead is significantly reduced. The interference awareness allows the system to avoid significant co-channel interference (CCI) and to operate with full frequency reuse. When applied to a broadband OFDM air interface, this principle can also exploit the frequency selective fading channel on the intended as well as the interference link. This results in an autonomous sub-carrier allocation algorithm, which can dynamically adapt to time varying channels. Due to its decentralized nature, the algorithm can be utilized in both cellular and ad hoc networks.

Decentralized channel reservation protocols are applied to reduce the amount of collisions that are typical for random access channels, for example, used as Ethernet or wireless ad hoc networks. Collisions are encountered when a channel is in contention and several users attempt to access the channel, for example, the same slot, at the same time instant. The introduction of channel reservation reduces the occurrence of the contention phase to the initial allocation, i.e. the first time a slot is allocated or a channel is accessed.

Unlike ad hoc networks, the resource allocation in cellular networks is typically carried out in a centralized manner in the way that the base station is in full control of assigning slots to different users. By doing so, interference within a cell can be completely avoided. On the other hand, centralized approaches for interference mitigation between cells are, in many cases, prohibitive due to the excessive signaling overhead so to gather interference measurements conducted by each receiver at a central scheduler.

Facing the fundamental problems of a centralized approach, in conventional cellular systems, the effects of inter-cell interference are typically tackled by averaging, for example, by means of a CDMA (Code Division Multiple Access) or a low rate channel code and/or through resource partitioning, cf S. Halpern, "Reuse partitioning in cellular systems," Proc. IEEE Vehic. Technol. Con f. (VTC'83), Toronto, Canada, vol. 33, pp. 322-327, May 1983. The authors propose a concept of reuse partitioning in cellular system designs. The authors show that the system capacity can be increased with reuse partitioning over that which can be achieved with a single reuse factor for a given performance objective. Moreover, the proposed concept is fully compatible with concepts of overlaid cells and retained channel sets.

Resource partitioning is a method which implements different reuse zones per cell, i.e. which divides a cell coverage area into concentric zones with different reuse factors, cf M. Sternad, T. Ottosson, A. Ahlen, and A. Svensson, "Attaining both Coverage and High Spectral Efficiency with Adaptive OFDM Downlinks," in Proc. IEEE Vehic. Technol. Conf. 2003-Fall (VTC'F03), Orlando, USA, October 2003, pp. 2486-2490. The authors propose a downlink radio interface for cellular packet data systems with wide area coverage and high spectral efficiency. A slotted OFDM radio interface is used in which time-frequency bins are allocated adaptively to different users within a downlink sector/beam based on the channel quality. Fading channels generated by vehicular speeds of up to 100 km/h may be accommodated. Frequency division duplex (FDD) is assumed, which requires channel prediction in the terminals and feedback of that information to a packet scheduler at a base station. To attain both high spectral efficiency and good coverage within a sector/beam, a scheme based on coordinated scheduling between sectors of the same side and deployment of frequency reuse factors above 1 only in outer parts of the sectors are proposed and evaluated.

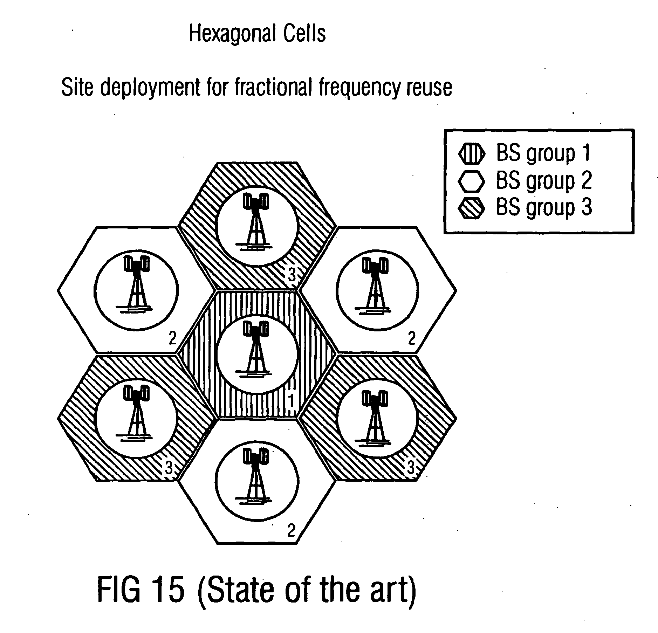

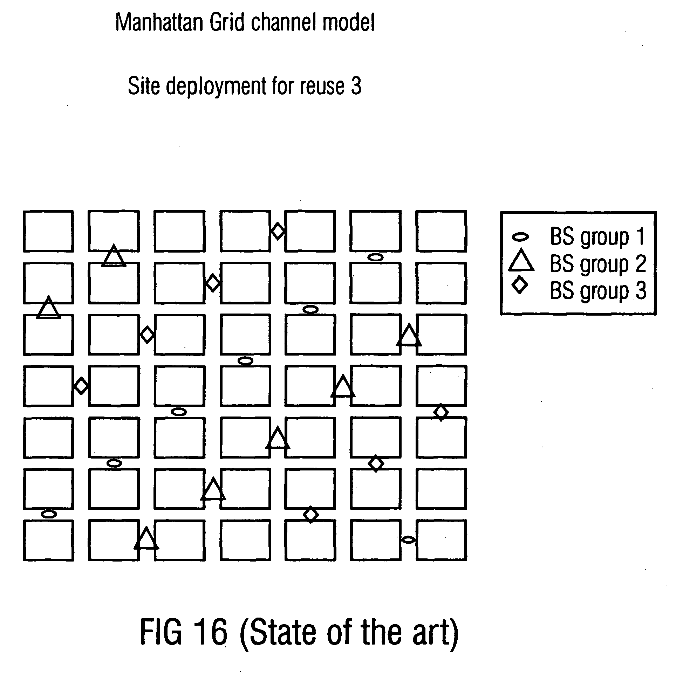

A simple and yet popular form of resource partitioning is to divide a cell into an inner zone with a reuse factor of 1 and an outer zone with, for example, a reuse factor of 3. A common embodiment of resource partitioning is fractional frequency reuse (FFR), which typically involves a sub-band commonly used by all cells, i.e. with a frequency reuse of 1, while the allocation of the remaining sub-bands is coordinated among the neighboring cells, so as to create for each cell, one sub-band with a lower inter-cell interference level. FFR means that users are not allowed to transmit on the cell-edge sub-band assigned to adjacent cells. FFR with reuse 3 is applicable for hexagonal cells, as well as for Manhattan grid deployment as shown in Figs. 15 and 16.

Fig. 15 shows a state of the art network scenario, wherein a cluster of base stations is shown. The base stations belong to different base station groups, which are labeled by 1, 2 and 3, as well as indicated by different grey scales. The base station in the center of the cluster belongs to base station group 1. The base stations surrounding the base station in the center are alternately assigned to groups 2 and 3. The white circular zone within each cell's center area is the area where a frequency with reuse factor 1, i.e. the same frequency in each cell, is used. At the cell-edges, different frequencies are used according to the different base station groups. Therewith, at the cell-edges, inter-cell interference is prohibited by using different frequencies.

Fig. 16 shows a Manhattan grid scenario where a base station deployment is shown for a reuse factor of 3, which is indicated by different icons of the base station groups. As signals within a Manhattan grid scenario are guided along the street canyons, a different geometry can be determined by network planning. It can be seen in Fig. 16 that frequency reuse, i.e. each base station group uses different frequencies, is planned in a way that the along one street, only base stations being assigned to different base station groups occur.

Both interference mitigation by averaging and fractional frequency reuse have severe limitations. The former essentially penalizes cell-edge users due to the low SINRs (SINR = Signal-to-Interference-and-Noise-Ratio) at the cell border, while the latter is a static scheme that is unable to adapt to changes in the traffic load or the distribution of users within the cellular system. To this end, at times, the majority of users are close to the center of the cell, so that the reservation of exclusive frequency bands means a waste of resources. On the other hand, when users are mainly located near the cell border, cell-edge sub-bands tend to be overcrowded in a way that cell-edge users partly need to resort to transmitting on unprotected parts of the bands, so that inter-cell interference again compromises the attainable system throughput.

EP 1 868 400 A1 provides a method for allocating radio resources of a cellular communication network to cells of the cellular communication network, wherein the method comprises a step of determining a first number of subsets of radio resources from a given set of radio resources. The method further comprises a step of determining a second number of auxiliary sets of radio resources, wherein each auxiliary set of radio resources comprises the subsets of radio resources in a predefined order, and a step of assigning one of the second number of auxiliary sets of radio resources to each cell of the cellular communication network.

The given set of radio resources comprises the radio resources that are available to the cellular communication network. The set of radio resources is divided into a first number of subsets of radio resources, which may for example be specified by an operator of the communication network. A second number of auxiliary sets of radio resources is determined, wherein each auxiliary set of radio resources comprises the subsets of radio resources in a predefined order. The second number of auxiliary sets of radio resources is assigned to each cell of the cellular communication network. The second number may also be determined by the operator of the communication network.

An auxiliary set of radio resources comprises more than one subset of radio resources. An auxiliary set of radio resources can comprise all subsets of radio resources. Thus, all available radio resources of the communication network may be made available to the cells of the communication network. The subsets of radio resources are comprised in each of the second number of radio resources in a predefined order. Due to the predefined order, a priority is assigned to each of the subsets of radio resources in an auxiliary set of radio resources. The order then specifies how the various subsets of radio resources can be employed by the corresponding cell. For example, if an auxiliary set of radio resources comprises a first and a second subset of radio resources, wherein a predefined order specifies that a first subset of radio resources shall be used before a second subset of radio resources, then the cell employs the first subset of radio resources as long as all the communication with the mobile stations can be handled. Only when the full capacity of the first subset of radio resources is utilized, then the second subset of radio resources is further employed for the communication with the mobile stations.

It is the objective of the present invention to provide a more efficient concept for coordinating radio resources for accessing communication networks.

The objective is achieved by a transceiver apparatus according to claim 1, a method according to claim 17, a computer program according to claim 18, a mobile station according to claim 19, a base station according to claim 20 and a relay station according to claim 21.

The present invention, referred to as Contention Avoidance and Reservation Medium Access Control (CARMAC), is based on the finding that resources for accessing a radio channel, for example, in a contention mode, can be coordinated among network devices, while resources for an associated reservation mode, can be remain reserved. It is the finding of the present invention that resources, which may be used in a contention mode, can be grouped into at least a first and a second different and predetermined group of radio resources to be used in repetitive radio frames and, therewith, collisions in the contention mode can be reduced or even completely avoided. The selection of a specific group of radio resources takes place according to a predetermined scheme for an initial transmission so that different users having different predetermined schemes will have less conflicts with each other will have no conflicts with each other.. In embodiments, in which the predetermined schemes for the users are not fully orthogonal to each other, or in which one can not fully guarantee that the predetermined schemes of all possibly conflicting users prescribe different resources, collisions may be reduced in a way that a significantly reduced statistical probability of collision occurrence remains, which, nevertheless, enables a certain occurrence of collisions, therewith still enhancing a system's capacity compared to a situation, in which the resource grouping and using predetermined schemes for transceivers is not used.

Embodiments may implement the busy tone concept in a cellular deployment of wireless networks and particularly resolve the contention problem of decentralized initial allocation of time-frequency resource units, the so-called slots or chunks.

Embodiments may carry out a novel scheme to avoid the contention phase typically experienced in a reservation-based MAC protocol to a statistical extent and some embodiments even completely. Some embodiments may avoid the contention in a downlink of a cellular wireless network using a frequency or resource reuse concept, while, instead of assigning static rules of how to assign for example certain time and/or frequency slots to a cell, embodiments may carry out a dynamic assignment.

Embodiments, therewith, provide the advantage that all resources available at the base station and provided by a communication system may be used by each base station, however, in a coordinated, e.g. in a sequential way. In other words, an embodiment may be implemented at a base station, wherein the permission for a cell to access a certain slot is cyclically shifted across all slots. In embodiments, once a slot is accessed, a reservation protocol as, for example, the busy tone protocol ensures that these allocated slots are not inferred by adjacent base stations. In other words, a reservation mode resource allocation and reuse is already coordinated where embodiments may utilize a conventional protocol as, for example, the busy tone protocol. However, during contention mode, embodiments may establish a dynamic frequency reuse scheme that completely avoids collision during contention. In other embodiments, at least collisions can be coordinated and the number of collisions can be decreased when compared to the state of the art reservation protocols.

Embodiments of the present invention provide the advantage that a system capacity can be enhanced. As the number of collisions throughout a network is decreased, extra system capacity can be achieved. Furthermore, embodiments achieve better access latencies for terminals, as channel access succeeds earlier with a decreasing number of collisions. Embodiments may also provide the advantage that a cellular structure that allows for frequency planning can be exploited to realize a contention-free dynamic channel allocation algorithm. Embodiments may completely avoid collisions with modest constraints on a scheduler. Embodiments, therewith, provide the advantage that they naturally complement the busy signal concept that allows for decentralized interference management in cellular systems.

Embodiments of the present invention will be described in the following using the accompanying Figs. in which:

Fig. 1a    shows an embodiment of a transceiver apparatus;

Fig. 1b    shows another embodiment of a transceiver appara- tus;

Fig. 2    shows an embodiment of a CARMAC grouping scheme;

Fig. 3    shows another embodiment of a CARMAC grouping scheme;

Fig. 4    shows another embodiment of a CARMAC grouping scheme;

Fig. 5    shows another CARMAC grouping;

Fig. 6    shows another CARMAC grouping;

Fig. 7    shows a Manhattan grid deployment scenario;

Fig. 8    shows simulation results for a number of chunks and outage for downlink transmission versus the number of time slots;

Fig. 9    shows simulation results on the number of chunks and outage for uplink transmission versus the number of time slots;

Fig. 10    shows simulation results on a number of allocated frequency chunks for downlink transmission versus the number of time slots;

Fig. 11    shows simulation results on the number of allo- cated frequency chunks for uplink transmission versus the number of time slots;

Fig. 12    shows simulation results on a throughput for downlink transmission versus a distance to the base station;

Fig. 13    shows a state of the art communication scenario;

Fig. 14    shows a state of the art busy tone concept;

Fig. 15    shows a state of the art frequency planning sce- nario; and

Fig. 16    shows a state of the art Manhattan grid deploy- ment scenario.

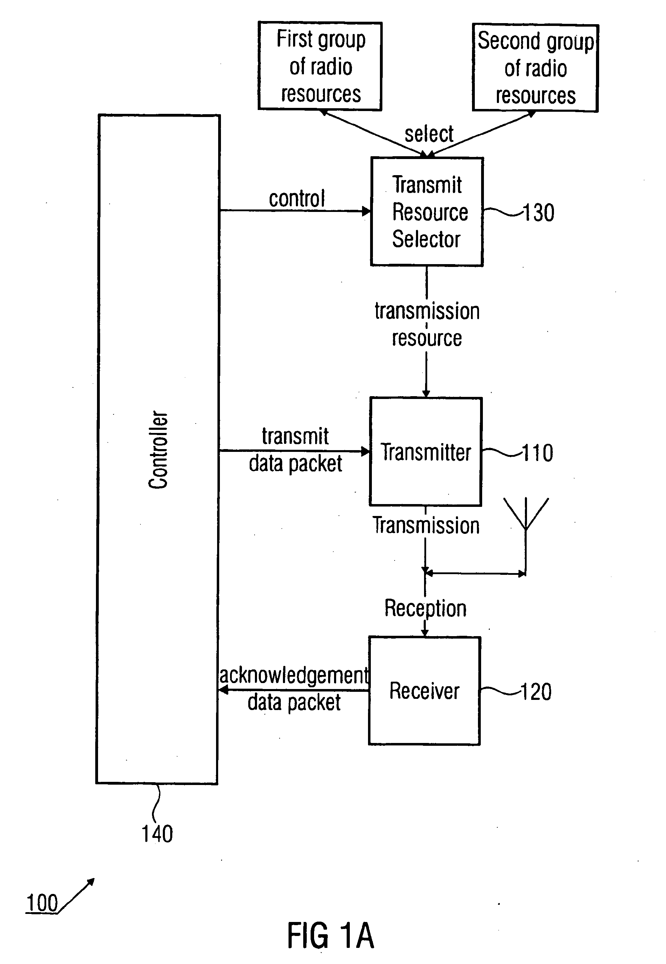

Fig. 1a shows a transceiver apparatus 100 for transceiving data packets in a mobile communication network, the mobile communication network having at least a first and a second different and predetermined group of resources to be used in repetitive radio frames. The transceiver apparatus 100 comprises a transmitter 110 for transmitting a transmit data packet using a transmission resource and a receiver 120 for receiving an acknowledgement associated with a transmit data packet. The acknowledgement, however, can also be obtained by the transceiver without using the receiver 120.

Furthermore, the transceiver apparatus 100 comprises a transmit resource selector 130 for selecting a transmission resource from the first or the second group of radio resources for the transmitter 110. In addition, the transceiver apparatus 100 comprises a controller 140 for controlling the transmit resource selector 130 to select a transmission resource from the first group of radio resources during a first radio frame for transmission of a first transmit data packet according to a predetermined scheme for an initial transmission, to select the same transmission resource during a second radio frame for transmission of a second transmit data packet if an associated acknowledgement is received for the first transmit data packet during the first radio frame.

Preferably, when the acknowledgement is not received, a transmission resource from the second group of radio resources is selected. Hence, the controller 140 is adapted for controlling the transmission resource selector 130 to select a transmission resource according to a predetermined scheme for an initial transmission and wherein the controller 140 is adapted for providing the transmit data packet to the transmitter 110 so that the corresponding data packet is sent via the selected transmit resource.

In embodiments, the predetermined scheme can be a sequence of groups of radio resources assigned to subsequent radio frames, e. g. in a system being based on a sequence of radio frames. During each of the radio frames, only resources of a certain group of radio resources may be selected for accessing a channel. During a subsequent radio frame, only resources from another group of radio sources may be considered. By defining the groups of radio resources in a predetermined way, embodiments enable coordination of access resources.

In embodiments, the predetermined scheme may be a sequence of cyclic assignments of a multiplicity of groups of radio resources to consecutive radio frames. As an example, three groups of radio resources are supposed. During a first radio frame, a transceiver apparatus 100 may use only resources from the first group, during a second radio frame, only resources from the second group, during the third radio frame, only resources from the third group of resources, during a fourth radio frame, again, only resources from the first radio resource group, etc. Therewith, radio resource utilization among different transceiver apparatuses 100 can be coordinated. Embodiments are not limited to the sequential pattern. In other embodiments, the number of different groups of radio resources may be large, for example, a hundred. Different sequences may be defined, which could be random rather than sequential. Even in a scheme, which randomly takes resources from a certain group, collisions may be statistically planned coordinated.

In different embodiments, the first and second group of radio sources may comprise one of, or a combination of, the group of a frequency, a number of sub-carriers, a time slot in a radio frame, a channelization code, a scrambling code, an interleaving rule or a spatial filtering rule.

In an embodiment, the transmitter 110 may be adapted for transmitting a transmit data packet during a payload signal time slot, the receiver 120 may be adapted for receiving an acknowledgement packet in a busy signal time slot associated with the payload signal time slot. In other words, embodiments may refer to the busy tone concept, as was described above. In embodiments, the first and the second different and predetermined groups of radio resources can also be overlapping, i.e. the groups may comprise radio resources, which are identical. Embodiments may still enable coordination of collisions, as collisions are, at least, statistically predictable and can be taken into account as part of radio resource management strategies.

In embodiments, the first and second different and predetermined groups of radio resources may be received from another transceiver apparatus. In other words, other transceiver apparatuses may deliver updates on radio resource groups. In some embodiments, the groups of radio resources may be preconfigured. In other embodiments a transceiver apparatus may be part of a mobile device for communicating in a mobile communication system and having stored a subset of the radio resources of the mobile communication system thereon. Embodiments of the transceiver apparatus 100 may be adapted for usage in different mobile communication networks. For example, an embodiment of an apparatus 100 and also the respective transmitter 110 and receiver 120 may be adapted for operation in a CDMA (Code Divisional Multiple Access), TDMA (Time Division Multiple Access), FDMA (Frequency Division Multiple Access), OFDMA (Orthogonal Frequency Division Multiple Access), IDMA (Interleaved Division Multiple Access) systems which, can be combined with the busy tone concept. Consequently, embodiments can be operative for operating an FDD (Frequency Domain Duplex) or a TDD (Time Domain Duplex) system.

In embodiments, the first and the second groups of radio resources can be orthogonal groups of frequency/ time slot combinations.

In embodiments, the receiver 120 can be adapted for receiving an acknowledgement by comparing a received signal power to a threshold and for receiving the acknowledgement when the reception power is above the threshold. For example, an embodiment, which is operative for a busy tone concept, may detect a busy tone by evaluating a reception power during a busy signal time slot against a threshold. Only if the reception power exceeds said threshold, the embodiment may consider the associated payload signal time slot as being reserved. When the reception power is below the threshold, the embodiment may go ahead and schedule a transmission during the associated payload signal time slots.

In other embodiments, the receiver 120 can be adapted for monitoring a radio resource consumption in a vicinity for providing information on used resources in the vicinity to the controller 130, i.e. the receiver 120 can be adapted for scanning the frequency and time domains, respectively any other radio resource domains as also spatial domains, for resources that are utilized by other transceiver apparatuses. From this perspective, in an embodiment, the controller 140 to which the results of the scanning are reported by the receiver 120, can decide on what radio resources or which group of radio resources is most promising to use.

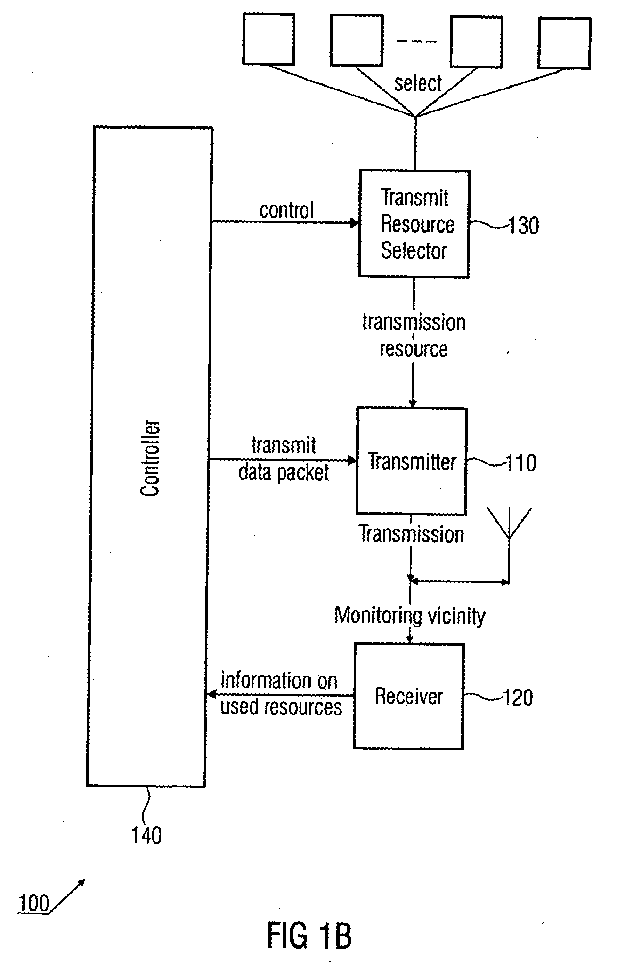

Fig. 1b shows another embodiment of an apparatus 100 having similar components as the apparatus 100 described in Fig. 1a. In Fig. 1b, the receiver 120 is adapted for monitoring a vicinity and for reporting information on used resources in the vicinity to the controller 140. The controller 140 can then evaluate how to control the transmit resource selector 130, which is in the embodiment depicted in Fig. 1b capable of selecting from a multiplicity of groups of radio resources. The controller 140 can control the transmit resource selector 130 in a way that the transmission resource is selected and provided to the transmitter 110 for which a probability that a collision occurs may be optimized, for example, by selecting a group of radio resources, which is not used in the vicinity. In another embodiment, the controller 140 may determine the group of radio resources for which the weakest signals have been monitored by the receiver 120.

In one embodiment, the controller 140 can be adapted for controlling the transmission resource selector 130 to select a transmission resource from a group of which the usage in the vicinity is lower than the usage of another group. In other words, if a group of radio resources is already excessively used in the vicinity of the transceiver apparatus 100, the controller 140 may not choose to select a resource from said group. The controller 140 may be adapted for choosing a transmission resource from a different group.

The controller 140 can be adapted for controlling the transmission resource selector 130 on the basis of monitored resources during a number of past radio frames. In other words, the controller 140 may be adapted for utilizing a time window, during which resource utilization in the vicinity is monitored through the receiver 120. For example, if a certain group of radio resources has not been used for a number of radio frames in the past, the controller 140 may decide to pick a resource from this group.

In the above-described embodiments, the vicinity may be determined by the receiver 120 being adapted for determining the vicinity by comparing a reception power of received signals to a threshold, the vicinity may comprise such transceiver apparatuses of which the reception power is above the threshold, i.e. vicinity may be defined by a coverage area of a radio interface. In another embodiment, transmission resource selection may be based on the reception power of other transceiver apparatuses using a group of radio resources. In other words, in an embodiment, a transmission resource may be selected from a group of radio resources from which rather weak reception signals, i.e. with reception powers below the threshold, are received.

An embodiment may be implemented in a mobile station, which can be adapted for being operative in a mobile communication network. Furthermore, one embodiment may be implemented in a base station transceiver in a mobile communication network or a relay station in a mobile communication network. In other words, embodiments may be implemented in several components of a mobile communication network where, in a contention mode, resource allocation between base stations may be coordinated for the downlink, but also for the uplink in the embodiments where the mobile station comprises an embodiment. Moreover, even relay stations may coordinate the resources using an embodiment in the above-described manner.

In one scenario a mobile station may acts as a gateway for surrounding other transceivers. In other embodiments a mobile station may use means of NFC (Near Field Communication) for communicating in its vicinity, using an embodiment for coordination of radio resources of the means for NFC. In other words an embodiment may be part of a hybrid or multi-protocol access networks, coordinating resources for multiple access schemes. Embodiments of the present invention, therewith, apply to all kinds of networks, i.e. to cellular networks, ad hoc networks, multi-hoc networks and hybrids thereof.

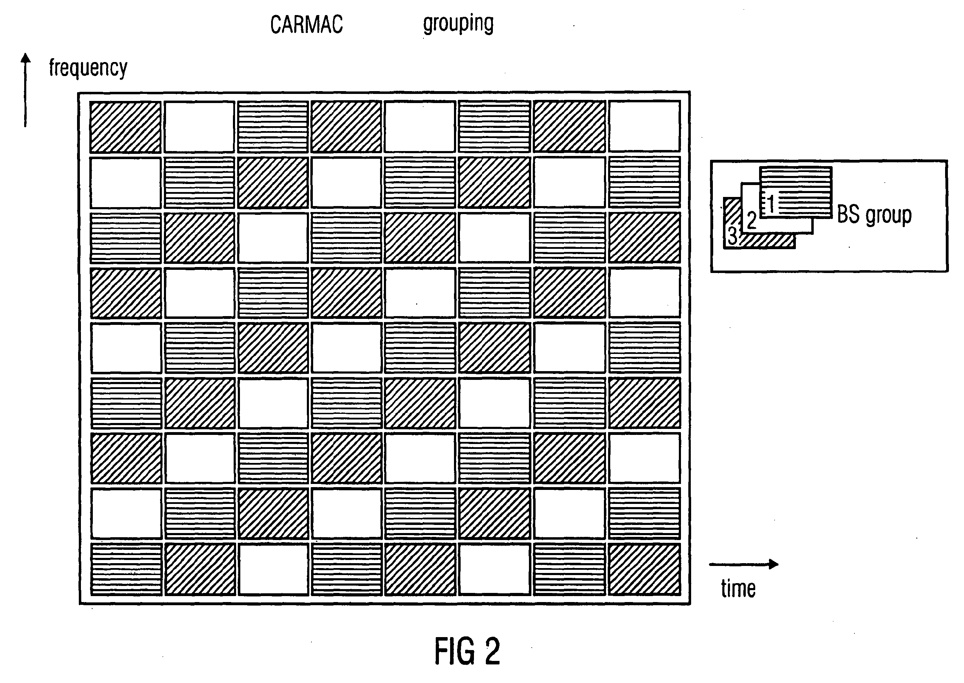

In the following, a detailed embodiment will be described. In one embodiment, the contention phase of decentralized reservation-based dynamic channel allocation (DCA) schemes is targeted by embodiments. The embodiment may avoid contention by means of frequency reuse portioning in a way that access to unreserved slots is controlled by mutually orthogonal time-frequency hopping patterns. Fig. 2 shows an embodiment of the proposed contention avoidance reservation MAC (CARMAC). Fig. 2 shows a time axis running from the left to the right and a frequency axis running from the bottom to the top. The different colored squares symbolize different base station groups of which there are three in the embodiment illustrated in Fig. 2.

Supposing that each cell is assigned one of the R (which is 3 in the example) reuse patterns in the way that adjacent cells do not share the same pattern, then R is the reuse factor. In this embodiment, the R time-frequency hopping pattern should, first, be mutually orthogonal and, second, allow that within R frames all slots can be accessed by all cells. One possible embodiment that achieves this requirement is to cyclically shift the reuse pattern over time and frequency. Once a slot is reserved, it is no longer in contention and is protected as long as the transmission is completed. Fig. 2 shows the pattern of a cyclical shift. Embodiments are not limited to a cyclical shift, which is just chosen for illustrative purposes and generally all kinds of sequences, even colliding sequences, are conceivable.

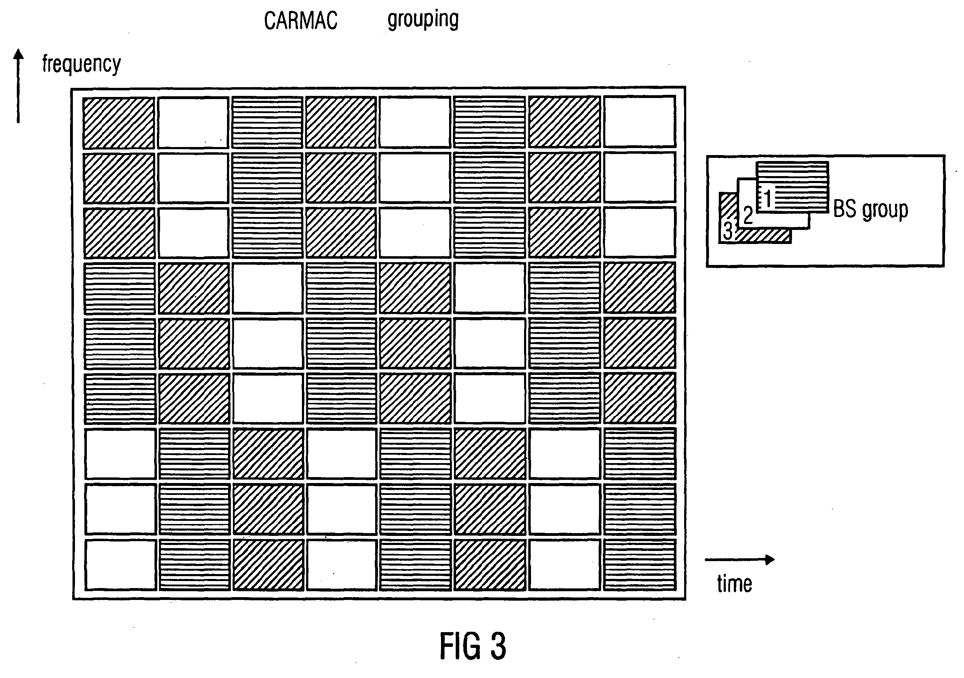

In the example considered for Fig. 2, the number of slots $N_b$ per sub-band is 1. Fig. 3 shows another example where the number $N_b$ of slots per sub-band is set to 3. In the following, an embodiment of the protocol for implementing a decentralized and contention-free reservation based medium access scheme is described. The cells of a system can be grouped into R groups, denoted by $G \in \{1, \cdots, R\}$. In this embodiment, the groups of radio resources are to be arranged such that cells or transceiver apparatuses 100 associated to the same group experience low interference, comparable to, for example, frequency planning in conventional cellular networks with frequency reuse partitioning as shown in Figs. 2 and 3. The groups of radio resources may be assigned to frequency-slots $1 \leq n \leq N_s$ according to the following cyclically shifted time-frequency reuse pattern

$$g_{n,t} = \left( \lfloor n/N_b \rfloor + t \right) \bmod R$$

$$(1)$$

where n and t are the slot indices in frequency n and time t. As mentioned above, the number of consecutive slots that form one subband may be noted by $N_b$. The relation between slots and subbands and the assignments of subbands to cell groups are depicted in Figs. 2 and 3 for R = 3.

As can be seen from Fig. 2, in an embodiment assigning one slot per subband, $N_b$ = 1, results in a distributed pattern of cell groups, while $N_b = N_s/R$ results in a localized pattern where all slots of the same group are assigned consecutively as indicated in Fig. 3, respectively.

Equation (1) ensures that a certain subband can be alternatingly made available for access to all cell groups. In embodiments, this can be the key to avoid contention for unreserved resources by allowing only base stations of one group to access a certain subband, collisions can be avoided completely provided that there is no mutual interference between the base stations belonging to the same group. As already mentioned above, the groups of radio resources may be orthogonal, there are other embodiments where they are not. In the embodiments where the radio resource groups are overlapping, collisions may be coordinated at least statistically.

Furthermore, let $\tilde{n}_{n,t} = \{0,1\}$ denote a reservation indicator or a busy signal/tone with $\tilde{n}_{n,t} = 0$ if slot (n,t) is idle and $\tilde{n}_{n,t} = 1$ otherwise. In this embodiment, a base station associated to a group G may access a slot provided the following condition is met

$$g_{n,t} = G \quad \text{and} \quad \tilde{n}_{n,t} = 0$$

$$(2)$$

In case $\tilde{n}_{n,t} = 0$ for all n, a certain time instant up to a fraction of 1/R of all available resources may be allocated by a certain cell. Hence, in embodiments, it may take R time slots to fully allocate all slots. In general, however, not all slots can be accessed by a certain cell due to a non-zero reservation indicator $\tilde{n}_{n,t} = 1$ set by adjacent cells.

In one embodiment provided that the transceiver apparatus 100 intends to send more data at slot n, the reservation indicator is set to one, $\tilde{n}_{n,t} = 1$, effectively protecting slot n from interference from other cell groups. Thus, a dynamic frequency resource partitioning scheme may be put in place by embodiments, wherein this scheme is more flexible than conventional resource partitioning, but avoids excessive interference to cell-edge users. As this embodiment of the scheme imposes restrictions as to when and how the users allow to access a given channel, this scheme can be viewed as a reservation based dynamic slot allocation algorithm that avoids contention.

Embodiments may be used in an FDMA system where the available bandwidth is subdivided in frequency. Embodiments may also be used in a TDMA or an OFDMA system, as will be described in the following. First, the embodiment for the TDMA system is considered.

In TDMA, the available resources are divided in time. One TDMA frame consists of $N_s$ slots. The permission to access a slot can be cyclically shifted over time in this embodiment. The cell groups are allowed to access slot n with $1 \leq s \leq N_s$ of frame t according to the following relation

$$g_{s+N_s t} = (s + t) \bmod R$$

$$(3)$$

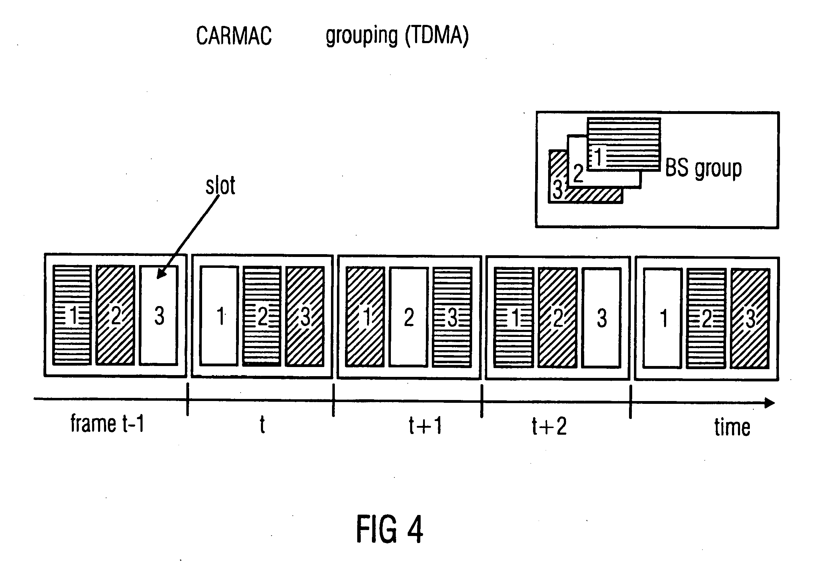

The TDMA embodiment may be considered very similar to the FDMA embodiment, as described above. Fig. 4 shows an illustration of a CARMAC grouping in a TDMA system. Fig. 4 depicts a time line running from the left to the right in which radio frames t-1, t, t+1, t+2, etc. are depicted. In each radio frame, there are three slots, which are numbered with 1, 2 and 3. Moreover, three base station groups are illustrated, utilizing different colors. As can be seen, during frame t-1, slot 1 belongs to the first base station group, slot 2 belongs to the third base station group and slot 3 belongs to the second base station group.

In frame t, group assignment has been cyclically shifted with respect to the slots, now slot 1 belongs to base station group 2, slot 2 belongs to base station group 1 and slot 3 belongs to base station group 3. Fig. 4 shows that the cyclical shift is carried out along the time axis in a repetitive manner. The embodiment illustrated in Fig. 4 controls the access of cells to slots for R = 3 and $N_s$ = 3. In analogy to equation (2), a base station associated to a group G may access a slot provided the following condition is met

$$g_{s+N_s t} = G \quad \text{and} \quad \tilde{n}_{s+N_s t} = 0$$

$$(4)$$

where $\tilde{n}_{s+N_s t}$ is the reservation indicator for slot s and frame t.

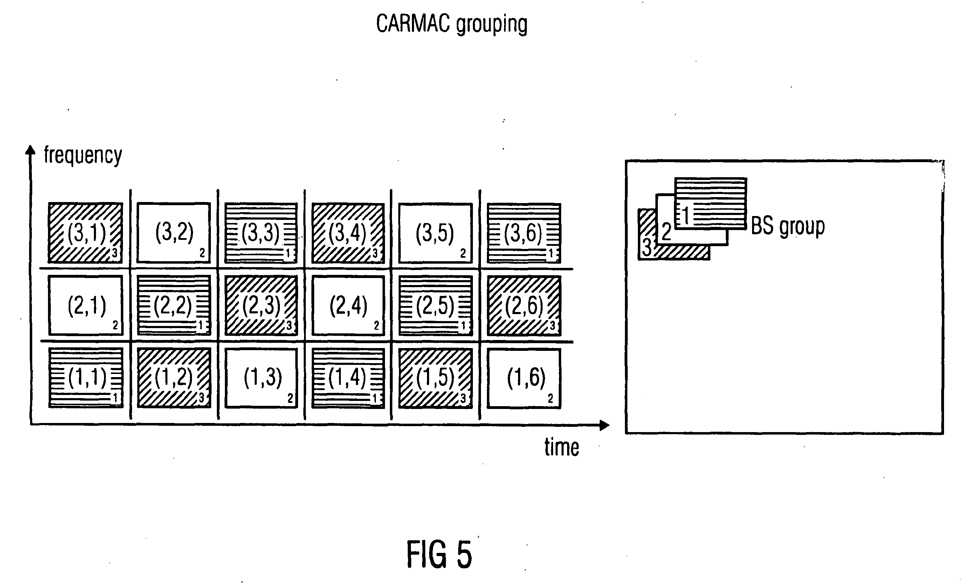

Another illustration of a CARMAC grouping is given in Fig. 5. Fig. 5 shows a time axis running from the left to the right and a frequency axis running from the bottom to the top. Moreover, six consecutive time slots are depicted along the time axis and three different subbands are depicted along the frequency axis. Each radio resource, respectively slot or chunk, in this embodiment comprises a time slot and a subband. In each radio resource or radio resource group, respectively, the number of the assigned base station group is depicted in the lower right corner. Moreover, two numbers are given in the center of each resource, the first number indicating the subband along the frequency axis, the second number indicating the time slot along the time axis. The embodiment depicted in Fig. 5 illustrates how the cyclical shift can be carried out along the frequency and time axis.

In the following, an embodiment for an OFDMA system is considered. OFDMA may be viewed as a particular implementation of FDMA, therefore, the application to OFDMA is straightforward. In OFDMA one time-frequency resource unit (slot or chunk) is composed of $n_{SC}$ subcarriers and $n_{OS}$ OFDM symbols. The slot defines the granularity of the OFDMA system. For instance, in a TDD mode of the WINNER (Wireless Word Initiative New Radio) system with 100 MHz bandwidth has 208 frequency slots and the effective signal bandwidth is 81.25 MHz with the remaining 10,75 MHz being used as frequency guard band. The slots are organized into frames, each frame consists of a downlink subframe followed by an uplink subframe.

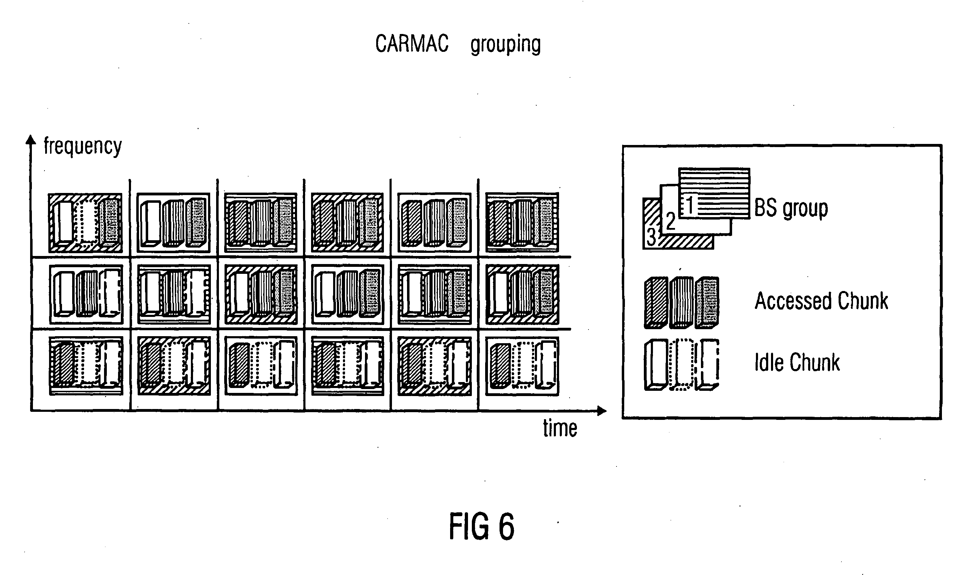

Fig. 6 illustrates another CARMAC grouping scheme, which may be carried out in an OFDMA system. Fig. 6 is very similar to Fig. 5, except that within one transmission resource, or a group of resources, actually three transmission resources or chunks are comprised, which is indicated by a group of three chunks within each time and frequency group of radio resources. Moreover, Fig. 6 distinguishes between actually accessed chunks, which are displayed in solid color and idle chunks, which are displayed in transparent color. In addition, base station group assignment in Fig. 6 is similar to what was shown in Fig. 5, the numbering was skipped in Fig. 6 for the sake of simplicity. The embodiment depicted in Fig. 6 assigns only resources from the respective base station group of which there are three and each contains three different chunks.

In the first subband depicted at the bottom of Fig. 6, it can be seen that in each time slot, the first chunk is accessed, where the second and third chunks are idle. In the second subband, depicted in the middle of the three sub-bands in Fig. 6, the first chunk is always idle and the second chunk is always accessed. The third chunk is only idle during the first two time slots and then accessed during the last six time slots, etc.

In the following, an embodiment will be considered, which uses the busy signal concept. A natural combination of the embodiment of contention free dynamic channel allocation (DCA) algorithm is the combination with the busy signal concept. Let $T^d$ represent the data transmit power for all transmitters and $T^b$ represent the busy signal transmit power for all receivers. Furthermore, let $H_{n,t}^{(x,y)}$ represent the channel gain for the link between nodes x and y on slot n and frame $t$, which takes into account both fast fading and log-normal shadowing. The potential amount of interference caused at a cell $G = 1$ due to transmission from cell $G = \mu$, $\mu \neq 1$, on slot $n$ and frame $t$ is given by $I_{n,t}^{d} = H_{n,t}^{(\mu,1)} \cdot T^{d}$ .

Provided channel reciprocity holds, i.e. $H_{n,t}^{(\mu,\nu)} = H_{n,t}^{(\nu,\mu)}$ , the "interference" from a receiver that transmits on the mini-slot is $I_{n,t}^{b} = H_{n,t}^{(1,\mu)} \cdot T^{b} = I_{n,t}^{d} T^{b} / T^{d}$ . This means that the interference that cell 1 suffers to an adjacent cell, is equivalent to the measured busy signal power of cell 1 in adjacent cells. The busy signal concept exploits channel reciprocity so to implement a slot reservation protocol, in the way that a slot can be accessed if the busy signal of a time-mulitplexed mini-slot is below a certain threshold:

$$\frac{T^{d}}{T^{b}} \cdot I_{n,t}^{b} \leq I_{thres} \qquad (5)$$

It is important to note that the threshold test is only effective for slots that are already reserved. In contention phase, on the other hand, slots are unreserved, which implies that no busy signal can be broadcast to prevent inter-cell interference. Clearly, the threshold test in (5) effectively serves as a reservation indicator introduced in (2). Therefore, the combination of the present invention with the busy signal concept is in the form

$$g_{n,t} = G \quad \text{and} \quad \frac{T^{d}}{T^{b}} \cdot I_{n,t}^{b} \leq I_{thres} \qquad (6)$$

It is seen that the embodiment of contention free DCA combined with the busy signal concept perfectly complement each other: the proposed DCA algorithm avoids excessive interference through contention, while the busy signal concept provides an efficient realization of a channel reservation protocol.

Although the embodiment of contention free DCA is most suited for cellular systems, application to ad hoc networks without network planning is also possible. Due to the lack of network planning the frequency reuse factor $R$ needs to be somewhat larger than for cellular systems. In theory it is possible to group a map within any 2D area with only 4 colors so that no border exhibits the same color, known as the four color theorem, cf K. Appel and W. Haken, "Solution of the Four Color Map Problem," Scientific American, vol. 237, no. 4, pp. 108-121, October 1977. On the other hand, finding appropriate coloring in a decentralized manner may be very complicated, so that in practice $R > 4$ may become necessary.

The problem of finding the appropriate group for a certain node also may be addressed by embodiments. A node measures its local environment for a given time prior to transmission and selects a group that none of the nodes in its close vicinity are using. If no free groups can be found, either the group associated to the weakest received signal power may be selected, or alternatively the group with the least transmission activity. This can ensure that the residual interference is kept to a minimum.

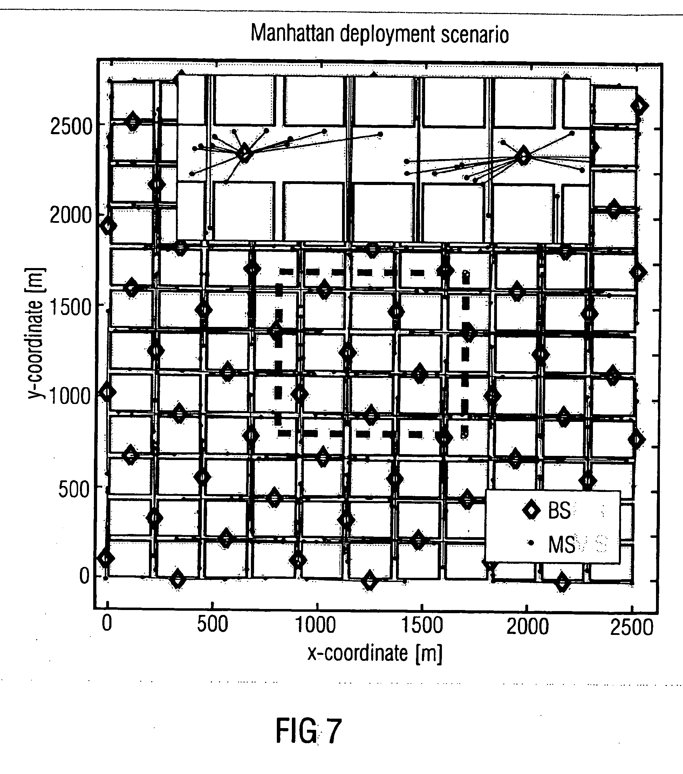

In the following, simulation results will be presented illustrating the advantages, which can be obtained using embodiments of the present invention. For the simulations, a microcellular deployment environment, as it is defined in scenario B1 in WINNER, cf IST-4-027756 WINNER II, "D1.1.2 WINNER II Channel Models," September 2007 is assumed. The deployment scenario consists of building blocks of dimensions 200m x 200m, interlaced with streets of width 30m in both x and y directions forming a regular structure called the Manhattan grid, as it is also shown in Fig. 7. Fig. 7 shows a snapshot of a Manhattan grid scenario in terms of a two-dimensional map, supposedly equivalent to a downtown Manhattan scenario. Fig. 7 shows two coordinates, the x coordinate running from the left to the right and the y coordinate running from the bottom to the top. Near the top of Fig. 7, there is a magnifying window illustrating two base stations and their connections to several mobile stations therewith. In order to reduce the edge effects, performance statistics are only collected over the central core of dimensions 3 x 3 building blocks shown with dashed lines from the grid of size 11 by 12 building blocks.

In addition, for a simulation, the physical layer of WINNER-TDD, cf IST-4-027756 WINNER II, "D6.13.7 Test Scenarios and Calibration Cases Issue 2," December 2006 was assumed consisting of 2048 subcarriers spanning a bandwidth of 100 MHz. Out of these 2048 subcarriers, only 1840 are used for data transmission.

An MAC-frame in WINNER-TDD is $691.2\mu s$ and consists of 2 time-slots. Each of these two time-slots contains 15 OFDM symbols. A chunk in WINNER-TDD consists of a group of 8 adjacent subcarriers and spans one time-slot in the MAC frame.

For the simulations carried out to obtain the results presented in the following, only outdoor users are considered. These users are assumed to be uniformly distributed in the streets and in constant motion with a velocity of 5km/h. At the beginning of a snapshot, 10 mobile stations (MS) per base station (BS) on average are distributed. The mobile stations are connected to a base station on the basis of a least distance to the base station if both the mobile station and the base station are located in the same street. Otherwise, the mobile station is allocated to a base station in a different street only if the path loss to such a base station would be lower than the one in the same street. The simulation environment and an example of a distribution of users is shown in Fig. 7 where the solid lines in the zoomed view depict the mobile stations connected to a base station.

For the simulations, the path loss between the transmitter and the receiver does not change over the snapshot duration. With a velocity of 5km/h and a simulation duration of 50ms, the mobile stations do not move sufficiently far apart to get significant change of the path loss. However, the fast fading effects are considered. For this purpose, a frequency selective time varying channel is generated using Monte Carlo method using parameters from a channel model B1, as of the WINNER channel model. Both fast fading and slow fading effects are considered if the path loss between the transmitter and the receiver is smaller than 140 dB. If the path loss is above 140 dB, the contribution of such users towards the interference power is less than -123.6 dBm on average, as the transmit power per chunk is 16.4 dBm. The thermal noise per chunk is -117 dBm. As the received interference from such user on average is lower than the thermal noise level, the channel selectivity for such interfering link is ignored.

Moreover, for the simulations, a full buffer traffic model, where each mobile station is trying to continuously receive and send data, is considered. Perfect synchronization between transmitters and receivers in time and frequency is assumed.

The system is simulated with the proposed contention free DCA algorithm. As reservation algorithm, the busy signal concept as already mentioned above, cf IST-4-027756 WINNER II, "D4.7.2 Interference avoidance concepts," June 2007 is used, also referred to as BT-OFDMA (Busy Tone OFDMA). For comparison, the performance is also evaluated for a p-persistent variant of BT-OFDMA, where transmission on an idle slot occurs with access probability p. For p-persistent BT-OFDMA collisions during the contention period are reduced in the way that unreserved slots are assigned to users with probability $p \in (0,1]$, where p = 1 corresponds to the original BT-OFDMA scheme where all slots that are considered idle are accessed.

Furthermore, channel allocation, which completely ignores interference is used as a benchmark system, which models a cellular system with frequency reuse 1. The statistics presented in the following were collected over 100 independent snapshots. The following Table summarizes the parameters used for the respective simulations:

| Parameters | Value |
|---|---|
| Transmit Power per chunk | 16.4 dBm |
| Total symbol length | 22.48 $\mu$s |
| Carrier center frequency | 3.95 GHz |
| System bandwidth | 100 MHz |
| Signal bandwidth | 89.84 MHz |
| Number of subcarriers (SC) | 2048 |
| Number of SCs used | 1840 |
| Frame duration | 0.6912 ms |
| OFDM symbols per frame | 30 |
| Chunk size | 15 (time) x 8 (frequency) = 120 |
| Number of chunks/frame | 2 (time) x 230 (frequency) |
| Bits/symbol | 2 |
| SINR target | 10 dB |
| Number of sectors/cell | 1 |
| Average number of MSs per BS | 10 |
| Number of snapshots | 100 |
| Antenna gain | 0 dBi |

In order to compare the different concepts, the performance is evaluated with three metrics, namely system throughput, outage over time and throughput per distance. Throughput is the number of bits that are received above or equal to the required SINR target. Outage is the percentage of slots assigned to a user, but do not meet the required SINR target.

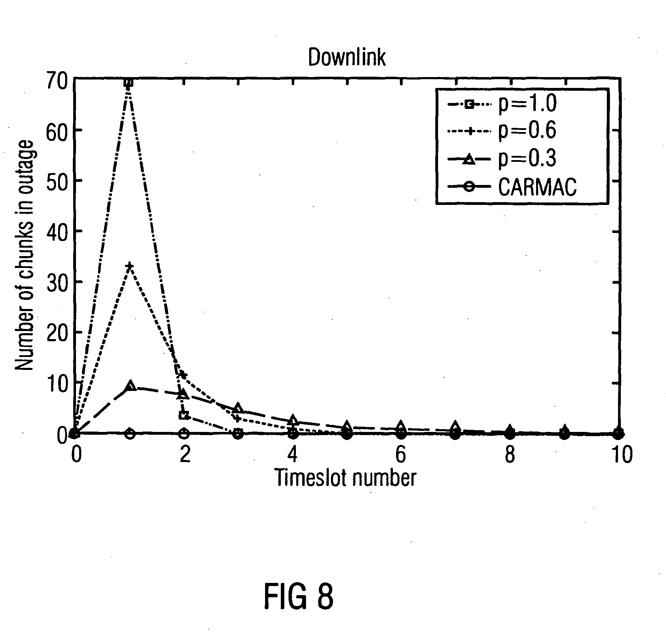

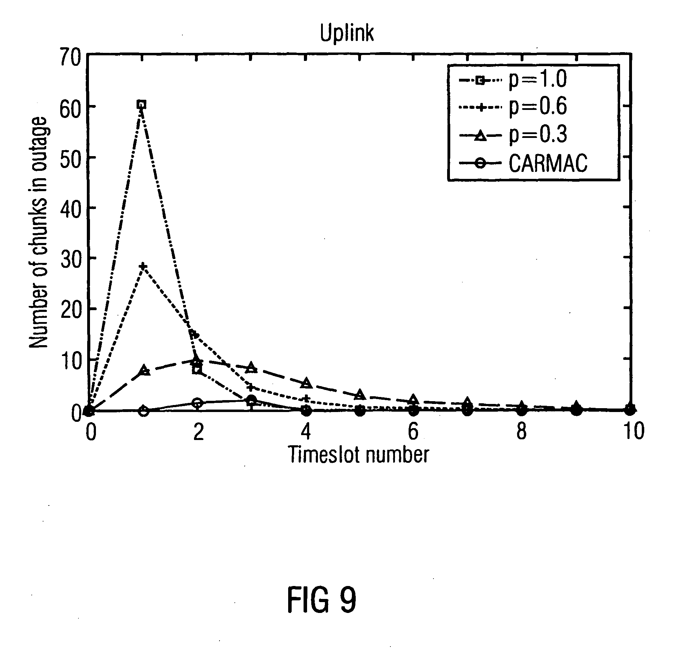

Figs. 8 and 9 show simulation results in terms of a number of chunks in outage versus a number of time slots. Fig. 8 shows simulation results for the downlink and Fig. 9, respectively for the uplink. In each view chart four different concepts were considered, namely the p-persistent BT-OFDMA for $p \in \{0.3, 0.6, 1.0\}$ and the embodiment of CARMAC (Contention Avoidance Reservation Medium Access Control).

Figs. 8 and 9 show the outage of a time, measured in frames, for downlink and uplink. At time zero, all slots are idle and every cell attempts to reserve slots dependent on the chosen slot allocation policy. Conventional BT-OFDMA suffers from significant collision probability, especially when p is high. While lowering p significantly reduces the number of slots in outage, the time until a steady state is reached increases. On the other hand, the embodiment CAMCAR reaches the steady state after only three frames, at a diminishing outage, illustrating the advantage of embodiments of the present invention.

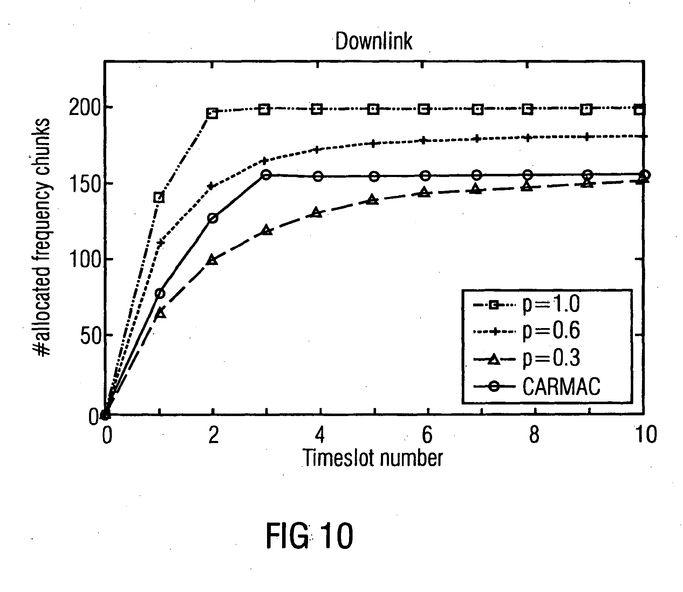

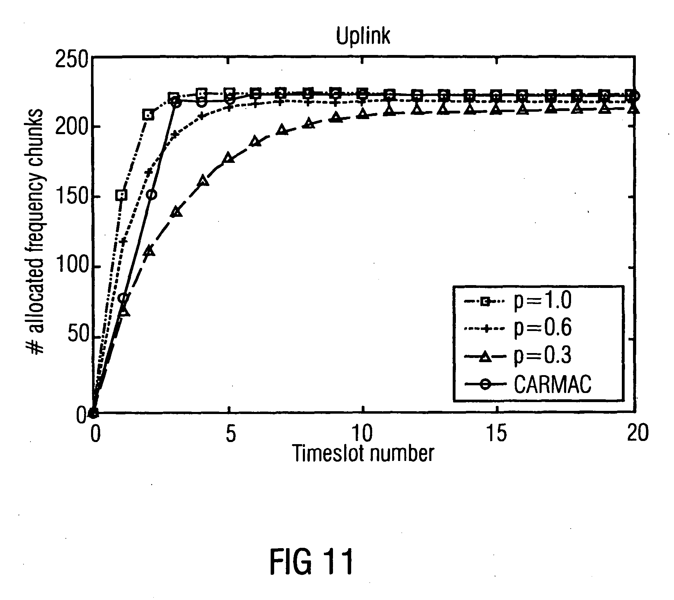

Figs. 10 and 11 illustrate two view charts showing the simulation results for the number of allocated frequency chunks versus the number of time slots. Fig. 10 shows the simulation results for the downlink. Fig. 11 shows the simulation results for the uplink. A similar trend can be observed for the number of successfully allocated slots shown in Figs. 10 and 11. Again, in the embodiment carrying out the CAMCAR, the DCA reaches a steady state after only 3 frames. Of note are the differences in steady state performance, in particular on the downlink depicted in Fig. 10. Here, the embodiment CAMCAR attains a similar throughput as p-persistent BT-OFDMA with access probability p = 0.3, while higher access probabilities p achieve a better steady state performance.

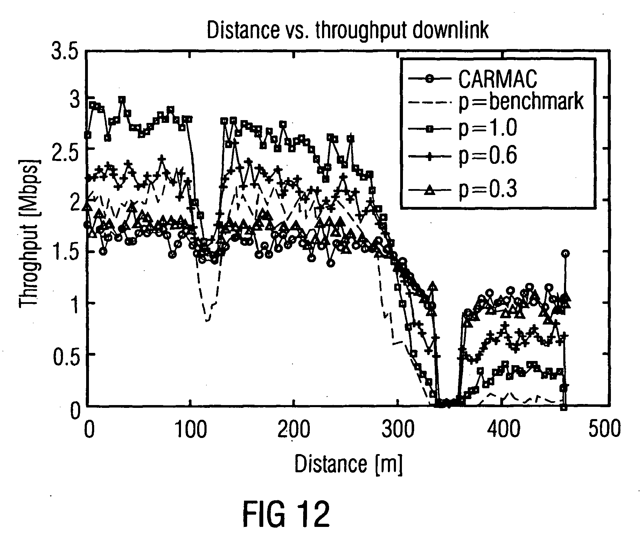

The origin of the different steady state performance on the downlink can be explained using Fig. 12, which illustrates a view chart displaying the throughput versus the distance in the downlink for the four concepts considered in Figs. 8 to 11 and the above-mentioned benchmark system. Fig. 12 shows the throughput over distance measured along a street canyon. It is seen that CAMCAR maintains a fair allocation of resources for all users within the cell. This is in sharp contrast to the conventional BT-OFDMA, where much of the gained throughput is achieved of cell-center users on the expense of cell-edge users' throughput. In other words, the system throughput of conventional BT-OFDMA is higher, but fairness is severely compromised. For the benchmark system, which emulates a reuse 1 system without any interference mitigation, cell-edge users are almost not served at all.

Embodiments of the present invention, therewith, provide the advantage that within a reservation protocol scenario, enhanced user fairness can be obtained. By avoiding collisions from which cell-edge users mostly suffer, the fairness of a system can be increased. Moreover, enhance system capacity can be obtained, as collisions are effectively avoided. With the enhanced fairness, a higher user satisfaction can be achieved, as especially cell-edge users would not experience service failures as often.

Depending on certain implementation requirements of the inventive methods, the inventive methods can be implemented in hardware or in software. The implementation can be performed using a digital storage medium, in particular, a disc, a flash memory, a DVD or a CD having electronically readable control signals stored thereon, which cooperate with a programmable computer system such that the inventive methods are performed. Generally, the present invention is, therefore, a computer program code with a program code stored on a machine readable carrier, the program code being operative for performing the inventive methods when the computer program runs on a computer. In other words, the inventive methods are, therefore, a computer program having a program code for performing at least one of the inventive methods when the computer program runs on a processor.

**Claims**

1. A transceiver apparatus (100) for transceiving data packets in a mobile communication network, the mobile communication network having at least a first and a second different and predetermined group of radio resources to be used in repetitive radio frames, comprising:

   a transmitter (110) for transmitting a transmit data packet using a transmission resource;
   a controllable transmit resource selector (130) for selecting a transmission resource from the first or the second group of radio resources for the transmitter (110); and
   a controller (140) for controlling the transmit resource selector (130) to select a transmission resource from the first group of radio resources in a first radio frame for transmission of a first transmit data packet according to a predetermined scheme for an initial transmission, and to select the same transmission resource during a second radio frame for transmission of a second transmit data packet if an associated acknowledgement is received for the first transmit data packet during the first radio frame.

2. The transceiver apparatus (100) of claim 1, wherein the predetermined scheme is a sequence of groups of radio resources assigned to subsequent radio frames.

3. The transceiver apparatus (100) of one of the claims 1 or 2, wherein the predetermined scheme is a sequence of cyclic assignments of a multiplicity of groups of radio resources to consecutive radio frames.

4. The transceiver apparatus (100) of one of the claims 1 to 3, wherein the first and the second group of radio resources comprise one of or a combination of the group of a frequency, a number of subcarriers, a time slot in a radio frame, a channelization code, a scrambling code, an interleaving rule or a spatial filtering rule.

5. The transceiver apparatus (100) of one of the claims 1 to 4, wherein the transmitter (110) is adapted for transmitting a transmit data packet during a payload signal time slot and wherein a receiver (120) is adapted for receiving an acknowledgement packet in a busy signal time slot associated with the payload signal time slots.

6. The transceiver apparatus (100) of one of the claims 1 to 5, wherein the first and the second different predetermined groups of radio resources are overlapping.

7. The transceiver apparatus (100) of one of the claims 1 to 6, wherein the first and the second different and predetermined groups of radio resources are received from another transceiver apparatus.

8. The transceiver apparatus (100) of one of the claims 1 to 7, wherein the mobile communication network is a CDMA, Code Division Multiple Acces, a TDMA, Time Division Multiple Access, FDMA, Frequency Division Multiple Access, OFDMA, Orthogonal Frequency Division tiple Access, OFDMA, Orthogonal Frequency Division Multiple Access or IDMA, Interleaved Division Multiple Access system.

9. The transceiver apparatus (100) of one of the claims 1 to 8, wherein the mobile communication network is an FDD, Frequency Division Duplex, or a TDD, Time Division Duplex, system.

10. The transceiver apparatus (100) of one of the claims 1 to 9, wherein the first, the second and a third group of radio resources are orthogonal groups of frequencytime slot combinations.

11. The transceiver apparatus (100) of one of the claims 1 to 10, wherein a receiver (120) is adapted for receiving an acknowledgement by comparing a received signal power to a threshold and for receiving the acknowledgment when the receive signal power is above the threshold.

12. The transceiver apparatus (100) of one of the claims 1 to 11, wherein the a (120) is adapted for monitoring a radio resource consumption in a vicinity for providing information on used radio resources in the vicinity to the controller (140) and wherein the controller (140) is adapted for controlling the transmit resource selector (130) to select a transmission resource from a group of radio resources, of which usage in the vicinity is lower than usage of another group of radio resources.

13. The transceiver apparatus (100) of claim 12, wherein the controller (140) is adapted for controlling the transmit resource selector (130) on the basis of monitored resources during a number of past radio frames.

14. The transceiver apparatus (100) of one of the claims 12 or 13, wherein a receiver (120) is adapted for determining the vicinity by comparing a reception power of receive signals to a threshold, the vicinity comprising transmitters of which the reception power is above the threshold.

15. The transceiver apparatus (100) of one of the preceding claims, further comprising
a receiver (120) for receiving an acknowledgement associated with a transmit data packet.

16. The transceiver apparatus (100) of one of the preceding claims,
in which the controller (140) is operative to control the transmission resource selector (130) to select a transmission resource from the second group of radio resources according to the predetermined scheme, if the associated acknowledgement is not received for the first transmit data packet during the first radio frame.

17. Mobile station for operating in a mobile communication network, the mobile station comprising a transceiver apparatus (100) of one of the claims 1 to 16.

18. Base station transceiver for operating in a mobile communication network, the base station transceiver comprising a transceiver apparatus (100) of one of the claims 1 to 16.

19. Relay station for operating in a mobile communication network, the relay station comprising a transceiver apparatus (100) of one of the claims 1 to 16.

20. Method for transceiving data packets in a mobile communication network, the mobile communication network having at least a first and a second different and predetermined group of radio resources to be used in repetitive radio frames, comprising:

determining a transmission resource from the first group of radio resources according to a predetermined scheme for an initial transmission;
selecting the determined transmission resource for transmitting, in a first radio frame, a first transmit data packet; and
selecting the same transmission resource during a second radio frame for transmission of a second transmit data packet if an associated acknowledgement is received for the first transmit data packet during the first radio frame.

21. Computer program having a program code for performing the method of claim 20 when the computer program runs on a processor.

**Patentansprüche**

1. Eine Sende-/Empfangsgerätvorrichtung (100) zum Senden/Empfangen von Datenpaketen in einem Mobilkommunikationsnetz, wobei das Mobilkommunikationsnetz zumindest eine erste und eine zweite unterschiedliche und vorbestimmte Gruppe von Funkressourcen aufweist, die in sich wiederholenden Funkrahmen zu verwenden sind, die folgende Merkmale umfasst:

einen Sender (110) zum Senden eines Sendedatenpaketes unter Verwendung einer Senderessource;
einen steuerbaren Senderessourcenselektor (130) zum Auswählen einer Senderessource aus der ersten oder der zweiten Gruppe von Funkressourcen für den Sender (110); und
eine Steuerung (140) zum Steuern des Senderessourcenselektors (130), um eine Senderessource aus der ersten Gruppe von Funkressourcen in einem ersten Funkrahmen zum Senden eines ersten Sendedatenpakets gemäß einem vorbestimmten Schema für eine Anfangssendung auszuwählen, und um die gleiche Senderessource während eines zweiten Funkrahmens zum Senden eines zweiten Sendedatenpaketes auszuwählen, falls für das erste Sendedatenpaket während des ersten Funkrahmens eine zugeordnete Bestätigung empfangen wird.

2. Die Sende-/Empfangsgerätvorrichtung (100) gemäß Anspruch 1, bei der das vorbestimmte Schema eine Sequenz von Gruppen von Funkressourcen ist, die nachfolgenden Funkrahmen zugewiesen sind.

3. Die Sende-/Empfangsgerätvorrichtung (100) gemäß einem der Ansprüche 1 oder 2, bei der das vorbestimmte Schema eine Sequenz von zyklischen Zuweisungen einer Vielzahl von Gruppen von Funkressourcen zu aufeinanderfolgenden Funkrahmen ist.

4. Die Sende-/Empfangsgerätvorrichtung (100) gemäß einem der Ansprüche 1 bis 3, bei der die erste und die zweite Gruppe von Funkressourcen eines oder eine Kombination aus der Gruppe aus einer Frequenz, einer Anzahl von Teilträgern, einem Zeitschlitz in einem Funkrahmen, einem Kanalführungscode, einem Verwürfelungscode, einer Verschachtelungsregel oder einer Raumfilterungsregel umfassen.

5. Die Sende-/Empfangsgerätvorrichtung (100) gemäß einem der Ansprüche 1 bis 4, bei der der Sender (110) angepasst ist zum Senden eines Sendedatenpakets während eines Nutzlastsignal-Zeitschlitzes, und bei der ein Empfänger (120) angepasst ist zum Empfangen eines Bestätigungspakets in einem Besetztsignal-Zeitschlitz, der den Nutzlastsignal-Zeitschlitzen zugeordnet ist.

6. Die Sende-/Empfangsgerätvorrichtung (100) gemäß einem der Ansprüche 1 bis 5, bei der die erste und die zweite unterschiedliche vorbestimmte Gruppe von Funkressourcen überlappen.

7. Die Sende-/Empfangsgerätvorrichtung (100) gemäß einem der Ansprüche 1 bis 6, bei der die erste und die zweite unterschiedliche und vorbestimmte Gruppe von Funkressourcen von einer anderen Sende-/Empfangsgerätvorrichtung empfangen werden.

8. Die Sende-/Empfangsgerätvorrichtung (100) gemäß einem der Ansprüche 1 bis 7, bei der das Mobilkommunikationsnetz ein CDMA- (Code Division Multiple Access = Codemehrfachzugriff), ein TDMA- (Time Division Multiple Access = Zeitmehrfachzugriff), FDMA- (Frequency Division Multiple Access = Frequenzmehrfachzugriff), OFDMA- (Orthogonal Frequency Division Multiple Access = Orthogonal-Frequenzmehrfachzugriff) oder IDMA- (Interleaved Division Multiple Access = Verschachtelter-Mehrfachzugriff) System ist.

9. Die Sende-/Empfangsgerätvorrichtung (100) gemäß einem der Ansprüche 1 bis 8, bei der das Mobilkommunikationsnetz ein FDD- (Frequency Division Duplex = Frequenzduplex) oder ein TDD- (Time Division Duplex= Zeitduplex) System ist.

10. Die Sende-/Empfangsgerätvorrichtung (100) gemäß einem der Ansprüche 1 bis 9, bei der die erste, die zweite und eine dritte Gruppe von Funkressourcen orthogonale Gruppen von Frequenz-Zeitschlitzkombinationen sind.

11. Die Sende-/Empfangsgerätvorrichtung (100) gemäß einem der Ansprüche 1 bis 10, bei der ein Empfänger (120) angepasst ist zum Empfangen einer Bestätigung durch Vergleichen einer empfangenen Signalleistung mit einem Schwellenwert und zum Empfangen der Bestätigung, wenn die empfangene Signalleistung über dem Schwellenwert liegt.

12. Die Sende-/Empfangsgerätvorrichtung (100) gemäß einem der Ansprüche 1 bis 11, bei der der Empfänger (120) angepasst ist zum Überwachen eines Funkressourcenverbrauchs in einer Umgebung zum Bereitstellen von Informationen über verwendete Funkressourcen in der Umgebung an die Steuerung (140), und bei der die Steuerung (140) angepasst ist zum Steuern des Senderessourcenselektors (130), um eine Senderessource aus einer Gruppe von Funkressourcen auszuwählen, deren Verwendung in der Umgebung niedriger ist als die Verwendung einer anderen Gruppe von Funkressourcen.

13. Die Sende-/Empfangsgerätvorrichtung (100) gemäß Anspruch 12, bei der die Steuerung (140) angepasst ist zum Steuern des Senderessourcenselektors (130) auf der Basis von überwachten Ressourcen während einer Anzahl von vergangenen Funkrahmen.

14. Die Sende-/Empfangsgerätvorrichtung (100) gemäß einem der Ansprüche 12 oder 13, bei der ein Empfänger (120) angepasst ist zum Bestimmen der Umgebung durch Vergleichen einer Empfangsleistung von Empfangssignalen mit einem Schwellenwert, wobei die Umgebung Sender umfasst, deren Empfangsleistung über dem Schwellenwert liegt.

15. Die Sende-/Empfangsgerätvorrichtung (100) gemäß einem der vorhergehenden Ansprüche, die ferner folgendes Merkmal umfasst:

   einen Empfänger (120) zum Empfangen einer Bestätigung, die einem Sendedatenpaket zugeordnet ist.

16. Die Sende-/Empfangsgerätvorrichtung (100) gemäß einem der vorhergehenden Ansprüche,
    bei der die Steuerung (140) wirksam ist zum Steuern des Senderessourcenselektors (130), um eine Senderessource von der zweiten Gruppe von Funkressourcen gemäß dem vorbestimmten Schema auszuwählen, falls die zugeordnete Bestätigung für das erste Sendedatenpaket nicht während des ersten Funkrahmens empfangen wird.

17. Mobilstation zum Betreiben in einem Mobilkommunikationsnetz, wobei die Mobilstation eine Sende-/Empfangsgerätvorrichtung (100) gemäß einem der Ansprüche 1 bis 16 umfasst.

18. Basisstationssende-/empfangsgerät zum Betreiben in einem Mobilkommunikationsnetz, wobei das Basisstationssende-/Empfangsgerät eine Sende-/empfangsgerätvorrichtung (100) gemäß einem der Ansprüche 1 bis 16 umfasst.

19. Relaisstation zum Betreiben in einem Mobilkommunikationsnetz, wobei die Relaisstation eine Sende-/Empfangsgerätvorrichtung (100) gemäß einem der Ansprüche 1 bis 16 umfasst.

20. Verfahren zum Senden/Empfangen von Datenpaketen in einem Mobilkommunikationsnetz, wobei das Mobilkommunikationsnetz zumindest eine erste und eine zweite unterschiedliche und vorbestimmte Gruppe von Funkressourcen aufweist, die in sich wiederholenden Funkrahmen zu verwenden sind, das folgende Schritte umfasst:

Bestimmen einer Senderessource von der ersten Gruppe von Funkressourcen gemäß einem vorbestimmten Schema für eine Anfangssendung;

Auswählen der bestimmten Senderessource zum Senden eines ersten Sendedatenpakets in einem ersten Funkrahmen; und

Auswählen der gleichen Senderessource während eines zweiten Funkrahmens zum Senden eines zweiten Sendedatenpaketes, falls für das erste Sendedatenpaket während des ersten Funkrahmens eine zugeordnete Bestätigung empfangen wird.

21. Computerprogramm mit einem Programmcode zum Durchführen des Verfahrens gemäß Anspruch 20, wenn das Computerprogramm auf einem Prozessor läuft.


**Revendications**

1. Appareil émetteur-récepteur (100) pour l'émission-réception de paquets de données dans un réseau de communications mobile, le réseau de communications mobile présentant au moins un premier et un deuxième groupe différent et prédéterminé de ressources radioélectriques à utiliser dans des trames radioélectriques répétitives, comprenant:

   un émetteur (110) destiné à émettre un paquet de données de transmission à l'aide d'une ressource de transmission;
   un sélecteur de ressource de transmission contrôlable (130) destiné à sélectionner une ressource de transmission parmi le premier ou le deuxième groupe de ressources radioélectriques pour l'émetteur (110); et
   un contrôleur (140) destiné à commander le sélecteur de ressource de transmission (130) pour sélectionner une ressource de transmission parmi le premier groupe de ressources radioélectriques dans une première trame radioélectrique pour la transmission d'un premier paquet de données de transmission selon un schéma prédéterminé pour une transmission initiale, et pour sélectionner la même ressource transmission pendant une deuxième trame radioélectrique pour la transmission d'un deuxième paquet de données de transmission s'il est reçu une confirmation associée pour le premier paquet de données de transmission pendant la première trame radioélectrique.

2. Appareil émetteur-récepteur (100) selon la revendication 1, dans lequel le schéma prédéterminé est une séquence de groupes de ressources radioélectriques attribuées à des trames radioélectriques successives.

3. Appareil émetteur-récepteur (100) selon l'une des revendications 1 ou 2, dans lequel le schéma prédéterminé est une séquence d'attributions cycliques d'une pluralité de groupes de ressources radioélectriques à des trames radioélectriques successives.

4. Appareil émetteur-récepteur (100) selon l'une des revendications 1 à 3, dans lequel le premier et le deuxième groupe de ressources radioélectriques comprennent l'un parmi ou une combinaison du groupe composé d'une fréquence, d'un nombre de sous-porteuses, d'un intervalle de temps dans une trame radioélectrique, d'un code de canalisation, d'un code de brouillage, d'une règle d'entrelacement ou d'une règle de filtration spatiale.

5. Appareil émetteur-récepteur (100) selon l'une des revendications 1 à 4, dans lequel l'émetteur (110) est adapté pour émettre un paquet de données de transmission pendant un intervalle de temps de signal de charge utile et dans lequel un récepteur (120) est adapté pour recevoir un paquet de confirmation dans un intervalle de temps de signal occupé associé aux intervalles de temps de signal de charge utile.

6. Appareil émetteur-récepteur (100) selon l'une des revendications 1 à 5, dans lequel le premier et le deuxième groupe prédéterminé différent de ressources radioélectriques se chevauchent.

7. Appareil émetteur-récepteur (100) selon l'une des revendications 1 à 6, dans lequel le premier et le deuxième groupe prédéterminé différent de ressources radioélectriques sont reçus d'un autre appareil émetteur-récepteur.

8. Appareil émetteur-récepteur (100) selon l'une des revendications 1 à 7, dans lequel le réseau de communications mobile est un système CDMA, d'Accès Multiple par Différence de Code, un système TDMA, d'Accès Multiple par Répartition dans le Temps, un système FDMA, d'Accès Multiple par Répartition de Fréquence, un système OFDMA, d'Accès Multiple par Répartition de Fréquence Orthogonale ou un système IDMA, d'Accès Multiple par Répartition Entrelacée.

**9.** Appareil émetteur-récepteur (100) selon l'une des revendications 1 à 8, dans lequel le réseau de communications mobile est un système FDD, Duplex par Répartition de Fréquence, ou un système TDD, Duplex par Répartition dans le Temps.

**10.** Appareil émetteur-récepteur (100) selon l'une des revendications 1 à 9, dans lequel le premier, le deuxième et un troisième groupe de ressources radioélectriques sont des groupes orthogonaux de combinaisons de fréquence-intervalle de temps.

**11.** Appareil émetteur-récepteur (100) selon l'une des revendications 1 à 10, dans lequel un récepteur (120) est adapté pour recevoir une confirmation en comparant une puissance de signal reçu avec un seuil et pour recevoir la confirmation lorsque la puissance de signal reçu est au-dessus du seuil.

**12.** Appareil émetteur-récepteur (100) selon l'une des revendications 1 à 11, dans lequel le récepteur (120) est adapté pour surveiller une consommation de ressource radioélectrique dans un voisinage pour fournir des informations sur les ressources radioélectriques utilisées dans le voisinage du contrôleur (140) et dans lequel le contrôleur (140) est adapté pour commander le sélecteur de ressource de transmission (130) pour sélectionner une ressource de transmission parmi un groupe de ressources radioélectriques dont l'utilisation dans le voisinage est inférieure à l'utilisation d'un autre groupe de ressources radioélectriques.

**13.** Appareil émetteur-récepteur (100) selon la revendication 12, dans lequel le contrôleur (140) est adapté pour commander le sélecteur de ressource de transmission (130) sur base de ressources surveillées pendant un nombre de trames radioélectriques passées.

**14.** Appareil émetteur-récepteur (100) selon la revendication 12 ou 13, dans lequel un récepteur (120) est adapté pour déterminer le voisinage en comparant une puissance de réception de signaux de réception avec un seuil, le voisinage comprenant des émetteurs dont la puissance de réception est au-dessus du seuil.

**15.** Appareil émetteur-récepteur (100) selon l'une des revendications précédentes, comprenant par ailleurs un récepteur (120) destiné à recevoir une confirmation associée à un paquet de données de transmission.

**16.** Appareil émetteur-récepteur (100) selon l'une des revendications précédentes, dans lequel le contrôleur (140) est opérationnel pour commander le sélecteur de ressource de transmission (130) pour sélectionner une ressource de transmission parmi le deuxième groupe de ressources radioélectriques selon le schéma prédéterminé, si la confirmation associée n'est pas reçue pour le premier paquet de données de transmission pendant la première trame radioélectrique.

**17.** Station mobile destinée à fonctionner dans un réseau de communications mobile network, la station mobile comprenant un appareil émetteur-récepteur (100) selon l'une des revendications 1 à 16.

**18.** Emetteur-récepteur de station de base destiné à fonctionner dans un réseau de communications mobile, l'émetteur-récepteur de station de base comprenant un appareil émetteur-récepteur (100) selon l'une des revendications 1 à 16.

**19.** Station relais destinée à fonctionner dans un réseau de communications mobile, la station relais comprenant un appareil émetteur-récepteur (100) selon l'une des revendications 1 à 16.

**20.** Procédé d'émission-réception de paquets de données dans un réseau de communications mobile, le réseau de communications mobile présentant au moins un premier et un deuxième groupe différent et prédéterminé de ressources radioélectriques à utiliser dans des trames radioélectriques répétitives, comprenant:

déterminer une ressource de transmission parmi le premier groupe de ressources radioélectriques selon un schéma prédéterminé pour une transmission initiale;
sélectionner la ressource de transmission déterminée pour transmettre, dans une première trame radioélectrique, un premier paquet de données de transmission; et
sélectionner la même ressource de transmission pendant une deuxième trame radioélectrique pour la transmission d'un deuxième paquet de données de transmission s'il est reçu une confirmation associée pour le premier paquet de données de transmission pendant la première trame radioélectrique.

**21.** Programme d'ordinateur ayant un code de programme pour réaliser le procédé selon la revendication 20 lorsque le programme d'ordinateur est exécuté sur un processeur.

First group of radio resources

Second group of radio resources

select

control

Transmit Resource Selector ~130

transmission resource

Controller

transmit data packet

Transmitter ~110

Transmission

Reception

acknowledgement data packet

Receiver ~120

140

100

FIG 1A

FIG 1B

FIG 2

CARMAC      grouping

frequency

BS group

time

FIG 3

EP 2 104 391 B1

CARMAC grouping (TDMA)

BS group

slot

frame t-1    t    t+1    t+2    time

FIG 4

CARMAC grouping

FIG 5

EP 2 104 391 B1

CARMAC grouping

frequency

time

EP 2 104 391 B1

FIG 6

Manhattan deployment scenario

FIG 7

FIG 8

FIG 9

FIG 10

**FIG 11**

Distance vs. throughput downlink

FIG 12

Cell Sys Interference

$BS_2Rx$

$UT_2Tx$

$BS_3Rx$

$UT_3Tx$

$UT_1Rx$

$BS_1Tx$

Transmission

Interference

FIG 13 (State of the art)

FIG 14 (State of the art)

Hexagonal Cells

Site deployment for fractional frequency reuse

FIG 15 (State of the art)

Manhattan Grid channel model

Site deployment for reuse 3

FIG 16 (State of the art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1868400 A1

### Non-patent literature cited in the description

- **W. Crowther ; R. Rettberg ; D. Walden ; S. Ornstein ; F. Heart.** A System for Broadcast Communications: Reservation-ALOAH. *Proc. 6th Hawaii Int. Conf. Sys. Sci.,* January 1973, 371-374
- **D. J. Goodman ; R. A. Valenzuela ; K. T. Gayliard ; B. Ramamurthi.** Packet Reservation Multiple Access for Local Wireless Communications. *IEEE Trans. Commun.,* August 1989, vol. 37 (8), 885-890
- **L. Roberts.** ALOHA packet system with and without slots and capture. *ACM Comput. Commun. Rev.,* April 1975, vol. 5, 28-42

- **H. Haas ; V. D. Nguyen ; P. Omiyi ; N. H. Nedev ; G. Auer.** Interference Aware Medium Access in Cellular OFDMA/TDD Network. *Proc. IEEE Int. Conf. Commun. (ICC'06),* 11 June 2006
- **S. Halpern.** Reuse partitioning in cellular systems. *Proc. IEEE Vehic. Technol. Con f. (VTC'83),* May 1983, vol. 33, 322-327
- **M. Sternad ; T. Ottosson ; A. Ahlen ; A. Svensson.** Attaining both Coverage and High Spectral Efficiency with Adaptive OFDM Downlinks. *Proc. IEEE Vehic. Technol. Conf. 2003-Fall (VTC'F03),* October 2003, 2486-2490
- **K. Appel ; W. Haken.** Solution of the Four Color Map Problem. *Scientific American,* October 1977, vol. 237 (4), 108-121